(19) Europäisches Patentamt

European Patent Office

Office européen des brevets

(11) **EP 0 670 485 B1**

(12) **EUROPÄISCHE PATENTSCHRIFT**

(45) Veröffentlichungstag und Bekanntmachung des Hinweises auf die Patenterteilung:
**23.10.2002 Patentblatt 2002/43**

(51) Int Cl.$^7$: **G01N 21/25**

(21) Anmeldenummer: **95250050.2**

(22) Anmeldetag: **01.03.1995**

(54) **Verfahren zur Bestimmung der Extinktion oder Transmission und Photometer**

Method for determining extinction or transmission and photometer

Procédé pour déterminer l'extinction ou la transmission et photomètre

(84) Benannte Vertragsstaaten:
**AT BE CH DE ES FR GB IE IT LI NL SE**

(30) Priorität: **02.03.1994 DE 4407332**

(43) Veröffentlichungstag der Anmeldung:
**06.09.1995 Patentblatt 1995/36**

(73) Patentinhaber: **Dr. Bruno Lange GmbH & Co. KG**
**D-14163 Berlin (DE)**

(72) Erfinder:
• **Hanschke, Clemens, Dipl.-Phys.**
**D-12205 Berlin (DE)**
• **Kuntze, Dietrich**
**D-13595 Berlin (DE)**

(74) Vertreter: **Christiansen, Henning et al**
**Eisenführ, Speiser & Partner**
**Patentanwälte**
**Pacelliallee 43/45**
**14195 Berlin (DE)**

(56) Entgegenhaltungen:
**EP-A- 0 185 405**

• **PATENT ABSTRACTS OF JAPAN vol. 13, no. 32 (P-817) 25. Januar 1989 & JP-A-63 229 335 (MINOLTA CAMERA CO LTD) 26. September 1988**
• **PATENT ABSTRACTS OF JAPAN vol. 7, no. 262 (P-238) 22. November 1983 & JP-A-58 144 768 (KASEI OPTUNOIKUSU KK) 29. August 1983**

**Beschreibung**

Die Erfindung betrifft ein Verfahren der im Oberbegriff des Anspruchs 1 angegebenen Art sowie eine Vorrichtung zur Durchführung des Verfahrens.

Verfahren zur photometrischen Ermittlung von Substanzkennwerten (beispielsweise Extinktionsmessungen) nutzen die stoff- bzw. reaktionsspezifische Schwächung einer bestimmten Lichtstrahlung, welche eine zu untersuchende Probe durchdringt. Die Probe befindet sich in einer durchstrahlbaren Küvette in einem Meßstrahlengang oder -kanal zwischen einer Lichtquelle und einem Fotoempfänger.

Zu Ermittlung der Transmission bzw. Extinktion der Probe wird in diesem Meßkanal die vom Fotoempfänger aufgenommene Lichtmenge $M_0$ bei einer sogenannten Leerwertmessung, bei der sich eine leere (oder keine) Küvette im Strahlengang des Meßkanals befindet, ermittelt und anschließend die Lichtmenge $M_M$, die der Fotoempfänger bei einer Messung mit einer probengefüllten Küvette im Strahlengang des Meßkanals aufnimmt, ermittelt. Die Extinktion ergibt sich daraus gemäß

$$E = \log (M_0 / M_M) \tag{1}$$

bzw. die Transmission T gemäß

$$T = M_M / M_0 \tag{1'}.$$

Analog kann vorgegangen werden. wenn die Transmissions- bzw. Extinktionsänderung einer Probe, etwa im Ergebnis einer physikalischen Umwandlung, einer chemischen Reaktion oder eines biologischen Prozesses, zu bestimmen ist: Hier wird die die Probe vor und nach dem entsprechenden (tatsächlichen oder erwarteten) Vorgang durchdringende Lichtmenge ermittelt und verglichen.

Bei diesem Meßverfahren ist vorauszusetzen, daß die Lichtquelle und das gesamte optische System konstante optische Eigenschaften aufweisen, daß sich insbesondere die Lichtintensität der Lichtquelle im Zeitraum zwischen den beiden Messungen nicht ändert. Dies ist jedoch auch bei hochwertigen Lichtquellen und stabilisierten Stromversorgungen nicht zu jedem Zeitpunkt-gewährleistet, so daß in der Praxis mit einer zeitabhängigen Lichtemission (beispielsweise durch Alterung der Lampe oder Spannungsschwankungen in der Stromversorgung) gerechnet werden muß.

Deshalb wird jeweils zeitgleich zu jeder Messung im Meßkanal eine Referenzmessung ausgeführt, indem ein Strahlungsanteil der Strahlung der Lichtquelle vom Meßstrahlengang abgezweigt und über einen Referenzstrahlengang oder -kanal, der nicht die Probe durchsetzt, dem Fotoempfänger zugeführt wird. zeitliche Lichtintensitätsschwankungen der Lichtquelle wirken sich in beiden Kanälen gleichermaßen aus, so daß die von der Probe herrührende Lichtintensitätsänderung und damit die Extinktion unverfälscht von Lichtquelleneffekten ermittelt werden kann.

Wenn die vom Fotoempfänger im Referenzkanal während der Leerwertmessung festgestellte Lichtintensität bzw. aufgenommene Lichtmenge $R_0$ und die zum Zeitpunkt der Messung mit probengefüllter Küvette aufgenommene Lichtmenge $R_M$ ist, läßt sich aus diesen Werten eine Korrekturgröße

$$D = (R_0 - R_M) / R_0 \tag{2}$$

bestimmen, mit der sich anstelle des in Gl. (1) bzw. (1') verwendeten Werts $M_0$ der Lichtmenge ein auf Lichtintensitätsschwankungen der Lichtquelle korrigierter Wert $M_E$ folgendermaßen gewinnen läßt:

$$M_E = M_0 - M_0 \cdot D = M_0 \cdot (R_M/R_0) \tag{3},$$

worin $M_0$ wieder die Lichtintensität im Meßkanal bzw. die dort aufgenommene Lichtmenge bei Leermessung ist. Alle Gleichungen gelten für "weißes" Licht (d.h. im wesentlichen ungefiltertes Licht der breitbandigen Lichtquelle oder eine vorgegebene Wellenlänge bzw. einen Wellenlängenbereich des Spektrums der Lichtquelle.

Photometrische Untersuchungen werden vielfach in jeweils einem vorgegebenen Wellenlängenbereich vorgenommen, der für eine bestimmte zu untersuchende Probe bzw. eine bestimmte Reaktion einer Probe o.ä. als relevanter Bereich vorbekannt ist und durch Vor- oder Nachschaltung eines geeigneten Filters im Meßstrahlengang festgelegt wird. Für andere Anwendungsfälle kann auch die Einschaltung von Polarisatoren oder anderen optischen Elementen in den Meßstrahlengang erforderlich sein. Eine weitgehend universell einsetzbare Photometerausstattung umfaßt daher eine Reihe von Farbfiltern mit unterschiedlichen Durchlaßbereichen und ggf. weiteren Zusatzelementen. Diese optischen Zusatzeinrichtungen stellen Bauteile mit hoher Präzision und entsprechenden Kosten dar.

Um das beschriebene Verfahren der Korrektur von anordnungsbedingten Lichtintensitätsschwankungen mittels Messung eines Referenzstrahls auch hierbei ausführen zu können, müssen im Grunde sowohl der Meßkanal als auch der Referenzkanal mit den jeweils gleichen optischen Elementen versehen sein. Eine solche Vorrichtung ist beispielsweise aus der EP 0 185 405 A1 bekannt. Für Messungen unterschiedlicher Proben bei unterschiedlichen Wellenlängen bzw. sonstigen Bedingungen (etwa Polarisationszuständen) müssen daher zwei Sätze optischer Zusatzeinrichtungen sowohl für den Meßkanal als auch für den Referenzkanal durchgeführt werden, oder es müssen Bauelemente mit so großen Abmessungen vorgesehen sein, daß Meß- und Referenzstrahlengang ein und dasselbe Element durchsetzen.

Dadurch entstehen für die komplette Meßausrüstung in erhebblichem Umfang zusätzliche Kosten, und bei Vorsehen ge trennter, kleinerer Elemente für Meß- und Referenzkanal ist zudem deren Austausch umständlich und birgt Fehlerquellen.

Der Erfindung liegt daher die Aufgabe zugrunde, ein Verfahren der eingangs genannten Gattung sowie eine Vorrichtung zur Durchführung des Verfahrens anzugeben, um photometrische Untersuchungen unter verschiedenen vorgegebenen optischen Bedingungen, insbesondere in verschiedenen vorgegebenen Wellenlängenbereichen, mit geringerem Aufwand bei ausreichender Genauigkeit durchzuführen.

Diese Aufgabe wird mit den kennzeichnenden Merkmalen der Ansprüche 1 bzw. 11 gelöst.

Die Erfindung schließt die Erkenntnis ein, daß bei einem sogenannten Planckschen Strahler die Wellenlängenabhängigkeit von Lichtintensitätsschwankungen über ein Nutzspektrum des Strahlers im wesentlichen gleichmäßig ist, sich mithin eine bei einer vorbestimmten Wellenlänge, in einem vorbestimmten Polarisationszustand des Lichts oder im ungefilterten Licht des Strahlers festgestellte Lichtintensitätsschwankung in einem (anderen) Wellenlängenbereich bzw. anderen Polarisationszustand in hinreichend exakter Weise mathematisch ausdrücken läßt.

Dies ermöglicht es, die erforderliche Messung der Lichtintensitätsschwankung im fraglichen anderen Wellenlängenbereich bzw. Polarisationszustand durch eine Näherungsrechnung zu ersetzen. Damit kann auf die jeweilige Bestückung auch des Referenzkanals mit den dem Meßkanal entsprechenden Bauelementen verzichtet werden.

Dadurch ist für die photometrische Ermittlung von Probenkennwerten, bei der Messungen bei unterschiedlichen Wellenlängen oder weiteren unterschiedlichen optischen Bedingungen erforderlich sind, eine erhebliche Reduzierung des Zubehör-Umfanges und ggfs. auch des Umrüstungsaufwandes und damit der Kosten für die Photometerausrüstung und die Messungen möglich.

Die Erfindung ist insbesondere in der Art mit Vorteil anwendbar, daß unabhängig von einer im Meßkanal zu untersuchenden Probe und der dort gewählten Untersuchungswellenlänge bzw. dem Untersuchungs-Polarisationszustand im Referenzkanal stets bei derselben Bezugswellenlänge bzw. in demselben Bezugswellenlängenbereich und/oder demselben Bezugs-Polarisationszustand des Lichts gemessen und die etwaigen Lichtintensitätsschwankungen auf solche bei der Untersuchungs-Wellenlänge bzw. im Untersuchungs-Polarisationszustand rückgerechnet werden.

Ein wesentlicher Vorteil dieses Verfahrens besteht darin, daß für die Bestimmung der Transmission bzw. Extinktion bei von der Bezugswellenlänge abweichenden Wellenlängen kein Filterwechsel im Referenzkanal vorgenommen werden muß und dadurch eine Kosteneinsparung für die Photometerausrüstung erreicht sowie der Bedienaufwand und die Dauer der Gesamtmessung erheblich verringert wird.

Entsprechend einer Ausführungsform der Erfindung wird bei einem Photometer die Extinktion einer Probe durch Vergieich der Lichtintensitätswerte einer Leerwertmessung und einer Messung mit Stoffprobe bei einer durch ein Farbfilter im Strahlengang vorgegebenen Untersuchungswellenlänge bestimmt, wobei als Meßwert der Leerwertmessung ein auf mathematischem Wege korrigierter Wert E verwendet wird, in den die bei einer einzigen - für alle Untersuchungswellenlängen gleichen, durch ein Farbfilter im Strahlengang des Referenzkanals vorgegebenen - Bezugswellenlänge gleichzeitig mit der Leerwertmessung bzw. der Messung mit Stoffprobe ermittelte Lichtintensität im Referenzkanal eingeht.

Unter einer Leerwertmessung ist dabei sowohl eine Messung ohne Probe, d.h. mit leerer Küvette, zu verstehen als auch allgemein eine Vergleichsmessung, etwa eine Messung mit Probe vor einem im Ergebnis eines chemischen, physikalischen oder biologischen Vorganges in der Probe erwarteten Farbumschlag.

Das verfahren kann auch so ausgestaltet sein, daß mit ein und derselben Probe eine Folge von zweiten Messungen bei unterschiedlichen Wellenlängen bzw. in verschiedenen Wellenlängenbereichen und/oder Polarisationszuständen des Lichts im Meßkanal durchgeführt wird, wobei sämtliche Messungen im Referenzkanal bei ein und derselben Wellenlänge und/oder in ein und demselben Polarisationszustand durchgeführt werden. Damit läßt sich eine breitere spektrale Untersuchung des Extinktionsverhaltens einer Probe ausführen.

Die Anpassung für unterschiedliche Filter im Meß- und Referenzkanal erfolgt durch eine Berechnung des Wertes ME nach der Beziehung

$$M_E = (M_0 - M_0 \cdot D) \cdot F = M_0 \cdot (R_M/R_0) \cdot F \qquad (4)$$

wobei der Faktor F die Intensitätsänderung der Lichtquelle bei der von der Bezugswellenlänge abweichenden Untersuchungs-Wellenlänge gegenüber der Bezugswellenlänge korrigiert und der Faktor D gemäß obiger Gl. (2) Lichtintensitätsänderungen der Lichtquelle ausdrückt.

Der so berechnete Wert von $M_E$ wird in obige Gl. (1) anstelle des Wertes M0 eingesetzt.

Entsprechend einer günstigen Weiterbildung der Erfindung wird der Faktor F gemäß der Gleichung

$$F = a \cdot D^2 + b \cdot D + c \qquad (5)$$

näherungsweise bestimmt, wobei die Koeffizienten a, b und c von der spektralen Intensitätsverteilung der Lichtquelle abhängig sind und jeweils für eine vorgegebene Lichtquelle wellenlängenspezifisch ermittelt werden.

Unter bestimmten Voraussetzungen sind jedoch auch lineare Approximationen möglich.

Bei Einsatz herkömmlicher Glühlampen als Lichtquelle im Photometer wird nach den Erkenntnissen der Erfinder die höchste Genauigkeit bei der Anpassung erreicht, wenn im Referenzkanal stets bei einer Bezugswellenlänge im blauen Bereich des Spektrums (etwa $\lambda$ = 440 nm) gemessen wird.

Prinzipiell ist es auch möglich, daß im Referenzkanal stets im ungefilterten Licht der breitbandigen Lichtquelle gemessen und die Anpassung für alle potentiell zum Einsatz kommenden Filter dem ungefilterten Licht gegenüber vorgenommen wird.

Die Vorrichtung zur Durchführung des Verfahrens ist als Photometer ausgebildet, welches eine breitbandige Lichtquelle mit der Strahlungscharakteristik eines Planckschen Strahlers aufweist und bei dem insbesondere je ein Interferenzfilter im Meßkanal und im Referenzkanal vorgesehen sind, wobei das Interferenzfilter im Meßkanal auswechselbar und das Interferenzfilter im Referenzkanal fest eingebaut ist.

Zur Berechnung der Extinktion aus den bei den einzelnen Wellenlängen im Referenzkanal und im Meßkanal sensorisch erfaßten Lichtintensitätswerten ist insbesondere ein Auswerte-System mit einem Zwischenspeicher für die Meßwerte aus der jeweiligen Vergleichsmessung, einer Eingabeeinheit und einem Speicher für die von der jeweiligen Wellenlänge abhängigen Koeffizienten aus Gl. (5) und die bei einer konkreten Messung gewählten Filter bzw. sonstigen optischen Elemente im Meßkanal, einer Berechnungseinheit zur Berechnung der Extinktion K aus den Lichtintensitätswerten des Meß- und Referenzkanals unter Berücksichtigung der Korrekturfaktoren D und F und einem Display zur Anzeige der berechneten K-Werte vorgesehen.

Eine fotometrische Untersuchungsausrüstung mit einem solchen Photometer als Meßgerät zeichnet sich dadurch aus, daß für verschiedenartige Untersuchungen ein Satz von Farbfiltern zum wahlweisen Einsetzen nur in den Meßkanal ohne Veränderung der optischen Bedingungen im Referenzkanal zur Verfügung steht.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1      eine Ausführungsform eines Fotometers zur Durchführung des Verfahrens in schematisierter Darstellung und

Figur 2      ein Blockschaltbild der Auswertungseinheit des Fotometers nach Fig. 1.

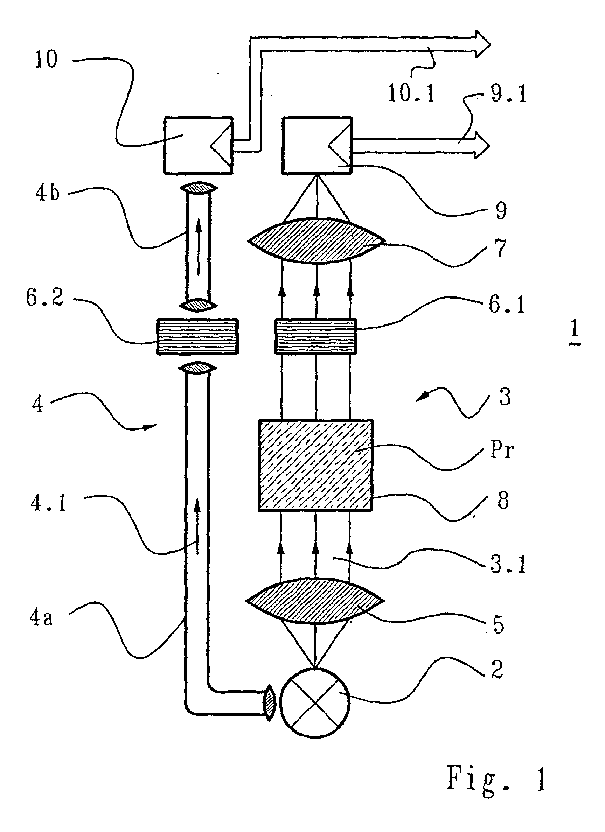

Das in Figur 1 schematisiert dargestellte Photometer 1 ist für die photometrische Ermittlung der Kennwerte von Proben über die Bestimmung der Extinktion K bei verschiedenenen Wellenlängen vorgesehen. Es weist einen Meßkanal 3 und einen Referenzkanal 4 auf, in die von einer Miniaturglühlampe 2 (Betriebsparameter 6 V, 420 mA, $T_F$ für 6 V: 2.620 K) Strahlung mit annähernd Planckscher spektraler Intensitätsverteilung gelangt. Im Meßkanal 3 wird eine zwischen Sammellinsen 5, 7 zur Strahlformung eine Küvette 8, die eine zu untersuchende Probe Pr aufnehmen kann, positioniert und eine Leerwertmessung (mit leerer Küvette 8) sowie danach eine Messung bei mit Probe gefüllter Küvette durchgeführt. Am Ende des Meßkanals ist hinter einem ersten, auswechselbaren Präzisions-Farbfilter 6.1 eine erste Fotodiode 9 zur Erfassung des jeweiligen Lichtintensitätswertes $M_0$ bzw. $M_M$ der den Meßkanal durchsetzenden Strahlung 3.1 bei einer entsprechend den Eigenschaften der Stoffprobe ausgewählten Wellenlänge (Untersuchungswellenlänge) angeordnet.

Der Referenzkanal 4 umfaßt eine erste und eine zweite Lichtleitfaseranordnung 4a und 4b, ein zwischen diesen angeordnetes zweites, fest eingebautes Farbfilter 6.2, dessen Durchlaßkurve ein Maximum bei einer Bezugswellenlänge von 440 nm hat, sowie eine zweite Fotodiode 10. Sowohl bei der Leerwertmessung als auch bei der Messung mit Probe im Meßkanal 3 wird die Lichtintensität der Strahlung 4.1 im Referenzkanal 4 durch die Fotodiode 10 erfaßt und zur Korrektur von Lichtintensitätsänderungen der Lichtquelle 2 dem im Meßkanal 3 gemessenen Lichtintensitätswert gegenübergestellt. Dazu werden die Signalausgänge (Spannungswerte) 9.1 bz. 10.1 der Fotodioden 9 und 10 einer elektronischen Weiterverarbeitung zugeführt.

Durch Berechnung entsprechend den obigen Gleichungen (1) - unter Einsetzung des sich aus Gl. (4) ergebenden $M_E$-Wertes für M0 - , (4) und (5) wird die im Hinblick auf Lichtintensitäts schwankungen der Lichtquelle korrigierte Extinktion E der Probe Pr erhalten.

Die nachstehend aufgeführten Werte für die Koeffizienten a, b und c in Gl. (5) sind für eine Lichtquelle in Form einer Lampe vom Typ YAA 256 mit den Anschlußwerten 6,0 V /420 mA und einer Farbtemperatur $T_F$ von 2620 K bei U = 6 V ermittelt worden:

| Wellenlänge $\lambda$ | | | Koeffizienten |
|---|---|---|---|
| 365 nm | a = -0,0498 | b = -0,1352 | c = 1,2170 |
| 440 nm | a = 0 | b = 0 | c = 1 |
| 500 nm | a = 0,0303 | b = 0,0542 | c = 0,8836 |
| 550 nm | a = 0,0516 | b = 0,0848 | c = 0,8012 |
| 600 nm | a = 0,0686 | b = 0,1053 | c = 0,7326 |
| 700 nm | a = 0,0922 | b = 0,1282 | c = 0,6250 |

Sie bildeten die Grundlage für erfolgreich durchgeführte Versuchsmessungen.

Es ist auch möglich, die Extinktion aufgrund einer linearen Approximation mittels folgender Beziehung zu bestimmen:

$$E = - \log M_M + \log M_0 + A(\lambda)(\log R_M - \log R_0) \tag{6},$$

wobei etwa für eine spezielle Lichtquelle folgende Koeffizienten A($\lambda$) gelten:

| Wellenlänge $\lambda$ | A($\lambda$) |
|---|---|
| 340 nm | 1,2608 |
| 440 nm | 1.0360 |
| 600 nm | 0,7591 |
| 700 nm | 0,6563 |

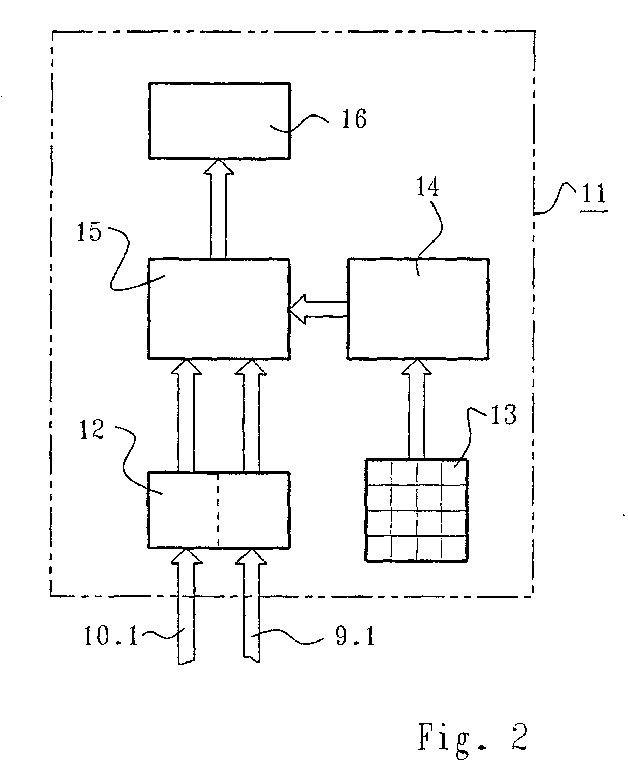

In Figur 2 ist eine Auswertungseinheit 11 zur Ermittlung der Extinktion K bei verschiedenen Wellenlängen in Form eines vereinfachten Blockschaltbildes dargestellt.

Die Auswertungseinheit weist als Hauptbestandteile einen mit den Ausgängen der Fotoempfänger 9 und 10 verbundenen Zwischenspeicher (Latch) 12 für Lichtintensitäts-Meßwerte und einen mit dem Ausgang einer Eingabetastatur 13 verbundenen Datenspeicher 14, eine mit den Ausgängen des Zwischenspeichers 12 und des Datenspeichers 14 verbundene Berechnungseinheit 15 und eine mit dem Ausgang der Berechnungseinheit verbundene Anzeigeeinheit (Display) 16 auf.

vor Beginn einer Messung müssen die für die verwendete Lichtquelle 2 gültigen Berechnungs-Koeffizienten sowie Kennungen für die bei der Messung im Meßkanal 3 verwendete(n) Wellenlänge(n) im Datenspeicher 14 verfügbar sein. Während die Eingabe der Koeffizienten in der Regel während der Lebensdauer einer Lichtquelle oder sogar überhaupt für einen bestimmten Lichtquellen-Typ nur einmal vorgenommen werden muß, muß die Kennung für die Untersuchungs-Wellenlänge (das konkret verwendete Filter) jedesmal bei Verwendung einer neuen Wellenlänge neu eingegeben werden.

Die von den Fotoempfängern 9 und 10 bei der zunächst ausgeführten Leerwertmessung abgegebenen Ausgangssignale 9.1 und 10.1 werden getrennt für Meß- und Referenzkanal im Zwischenspeicher 12 abgelegt. Nachdem die Ausgangssignale für die anschließende Messung mit Probe vorliegen, werden die Werte aus den Leerwertmessungen sowie die benötigten Daten aus dem Datenspeicher 14 zusammen mit den aktuellen Ausgangssignalen (beispielsweise auf einen über die Eingabetastatur gegebene Befehl hin) der Berechnungseinheit 15 zugeleitet, die entsprechend den oben angegebenen Gleichungen (1), (4) und (5) die Berechnung der Extinktion E ausführt. Der berechnete Wert von E wird auf dem Display 16 angezeigt.

Die Erfindung beschränkt sich in ihrer Ausführung nicht auf das vorstehend angegebene bevorzugte Ausführungsbeispiel.

So kann auf die Eingabetastatur auch verzichtet werden, wenn etwa das Photometer mit einem für die verwendete Lichtquelle mit den Koeffizienten a, b, und c vorprogrammierten Speichermodul ausgestatte wird und die einzelnen verfügbaren Farbfilter eine mechanische, elektrische, magnetische o.ä. Kennung aufweisen, die durch einen entsprechenden Fühler im Photometer selbsttätig abgetastet wird.

Im Referenzkanal kann auf den Einsatz eines Filters grundsätzlich auch verzichtet und stattdessen das Licht der Lichtquelle in seinem gesamten Spektralbereich registriert werden, wenn in der Berechnungseinheit eine Verarbeitung nach einer diesem Vorgehen angepaßten Näherungsformel erfolgt, die den integralen Charakter der Referenzmessung und den lokalen Anstieg der spektralen Intensitätsverteilung bei der Untersuchungs-Wellenlänge berücksichtigt.

Dem obigen Beispiel entsprechende Möglichkeiten bieten auch Messungen im polarisierten Licht - etwa zur Untersuchung optisch aktiver Substanzen - , wobei der Einsatz unterschiedlicher Polarisationsfilter im Referenzkanal durch eine rechnerische Berücksichtigung des im Meßkanal gewählten Polarisationszustandes ersetzt werden kann.

Auch kombinierte wellenlängen- und polarisationsabhängige Messungen lassen sich mit dem beschriebenen Verfahren und Fotometer vereinfachen.

Es ist auch möglich, das Verfahren mit mehreren Referenzwellenlängen durchzuführen, womit ein breiterer Wellenlängenbereich mit guter Näherung abgedeckt werden kann.

## Patentansprüche

1. Verfahren zur Bestimmung der Extinktion oder Transmission mindestens einer Probe (Pr), bei dem
   die von einer breitbandigen Lichtquelle (2) ausgesandte Strahlung geteilt,
   ein Teil der Strahlung über einen ersten, einen Meßkanal (3) bildenden Lichtweg durch die Probe (Pr) und ein eine Meßwellenlänge oder eine Polarisationsrichtung ausfilterndes, auswechselbares erstes optisches Filter (6.1) zu einem ersten Photoempfänger (9) geleitet wird,
   ein weiterer Teil der Strahlung über einen zweiten, einen Referenzkanal (4) bildenden Lichtweg, der optische Elemente (4a,4b,6.2) insbesondere ein zweites optisches Filter (6.2), aufweist, zu einem zweiten Photoempfänger (10) geleitet wird,
   mittels der Photoempfänger (9, 10) die jeweiligen Strahlungsintensitäten im Meß- und im Referenzkanal ($M_0$, $M_M$, $R_0$, $R_M$) ermittelt werden und
   bei einer Veränderung der im Referenzkanal ermittelten Strahlungsintensität gegenüber einem Ausgangswert der für den Meßkanal ausgegebene Intensitätswert entsprechend korrigiert wird, so daß er im wesentlichen derjenigen Intensität entspricht, welche empfangen worden wäre, wenn die Lichtquelle ihre ursprüngliche Strahlungsintensität beibehalten hätte,
   **dadurch gekennzeichnet, daß**
   der Strahlungsintensitätswert ($R_0$, $R_M$) im Referenzkanal (4) mittels der unverändert eingestellten optischen Element (4a,4b,6.2) insbesondere mittels eines festen Filters (6.2), für mindestens eine andere Wellenlänge bzw. einen anderen Wellenlängenbereich oder einen anderen Polarisationszustand innerhalb des Strahlungsspektrums der breitbandigen Lichtquelle (2) als der mittels des auswechselbaren Filters (6.1) im Meßkanal (3) ermittelte Strahlungsintensitätswert ($M_0$, $M_M$) ermittelt wird und
   für die Korrektur des im Meßkanal ausgegebenen Intensitätswertes der im Referenzkanal (4) ermittelte Strahlungsintensitätswert zusätzlich um einen Wert korrigiert wird, der für die durch das auswechselbare Filter (6.1) im Meßkanal (3) ausgefilterte Wellenlänge oder Polarisationsrichtung in Abhängigkeit von der Lichtquelle und der Einstellung der optischen Elemente (4a,4b,6.2) im Referenzkanal (4), insbesondere dem Durchlaßverhalten des festen Filters (6.2), vorbestimmt ist, derart, daß er im wesentlichen demjenigen Intensitätswert entspricht, der ermittelt worden wäre, wenn im Referenzkanal (4) ein Filter verwendet worden wäre, welches in seinem Durchlaßverhalten demjenigen (6.1) im Meßkanal (3) entspricht.

2. Verfahren nach Anspruch 1, **dadurch gekennzeichnet, daß** die Extinktion E unter Verwendung eines bei einer ersten Messung im Meßkanal (3) gemessenen Lichtintensitätswertes $M_0$, aus dem im Ergebnis einer gleichzeitigen Messung im Referenzkanal (4) der korrigierte Lichtintensitätswert ME bestimmt wird, und eines bei einer zweiten, zur ersten Messung zeitversetzten Messung im Meßkanal (3) mit der Probe (Pr) gemessenen Lichtintensitätswertes $M_M$ gemäß

$$E = \log (M_E/M_M) \tag{1'}$$

bestimmt wird, wobei sich $M_E$ aus der Beziehung

$$M_E = M_0 - M_0 \cdot D \cdot F = M_0(R_M/R_0) \cdot F \qquad (2)$$

ergibt, in der D ein erster Korrekturfaktor ist, der sich aus den während der ersten bzw. der zweiten Messung im Referenzkanal gemessenen Lichtintensitätswerten $R_0$, $R_M$ nach der Beziehung

$$D = (R_0 - R_M)/R_0 \qquad (3)$$

ergibt, und F ein zweiter, von der Wellenlänge und dem Polarisationszustand des bei der zweiten Messung im Referenzkanal verwendeten Lichtes abhängiger, vorbestimmter Korrekturfaktor ist.

**3.** Verfahren nach Anspruch 1 oder 2, **dadurch gekennzeichnet, daß** unabhängig von einer im Meßkanal (3) zu untersuchenden Probe (Pr) im Referenzkanal (4) stets bei derselben Bezugswellenlänge bzw. in demselben Bezugswellenlängenbereich und/oder demselben Bezugs-Polarisationszustand des Lichts gemessen wird.

**4.** Verfahren nach Anspruch 3, **dadurch gekennzeichnet, daß** im Referenzkanal (4) stets bei einer Bezugswellenlänge im blauen Bereich des Spektrums gemessen wird.

**5.** Verfahren nach Anspruch 3 , **dadurch gekennzeichnet, daß** im Referenzkanal stets im ungefilterten Licht der breitbandigen Lichtquelle (2) gemessen wird.

**6.** Verfahren nach einem der vorangehenden Ansprüche, **dadurch gekennzeichnet, daß** ein zweiter Korrekturwert F nach der Gleichung

$$F = a \cdot D^2 + b \cdot D + c \qquad (4)$$

bestimmt wird, worin die Koeffizienten a, b und c dimensionslose Zahlenwerte sind, die sich entsprechend dem Spektrum und/oder dem Polarisationszustand des ursprünglichen Lichts der Lichtquelle (2) und der Wellenlängen bzw. Wellenlängenbereiche und/oder Polarisationszustände des Lichts, in denen im Meß- bzw. Referenzkanal (3, 4) gemessen wird, berechnen.

**7.** Verfahren nach einem der Ansprüche 1 bis 5 , **dadurch gekennzeichnet, daß** ein zweiter Korrekturwert F mittels einer Näherungsgleichung bestimmt wird, in der als Koeffizienten dimensionslose Zahlenwerte auftreten, die sich entsprechend dem Spektrum und/oder dem Polarisationszustand des ursprünglichen Lichts der Lichtquelle (2) und der Wellenlängen bzw. Wellenlängenbereiche und/oder Polarisationszustände des Lichts, in denen im Meß- bzw. Referenzkanal (3, 4) gemessen wird, berechnen.

**8.** Verfahren nach einem der vorangehenden Ansprüche, **dadurch gekennzeichnet, daß** eine erste Messung im Meßkanal (3) ohne Probe (Pr) vorgenommen wird.

**9.** Verfahren nach einem der vorangehenden Ansprüche, **dadurch gekennzeichnet, daß** eine erste Messung im Meßkanal (3) mit einer Probe (4) vor und eine zweite Messung mit derselben Probe (Pr) nach einer tatsächlichen oder erwarteten physikalischen oder chemischen Veränderung derselben vorgenommen wird.

**10.** Verfahren nach einem der vorangehenden Ansprüche, **dadurch gekennzeichnet, daß** mit ein und derselben Probe (Pr) eine Folge von zweiten Messungen bei unterschiedlichen Wellenlängen bzw. in verschiedenen Wellenlängenbereichen und/oder Polarisationszuständen des Lichts im Meßkanal (3) durchgeführt wird, wobei sämtliche Messungen im Referenzkanal (4) bei ein und derselben Wellenlänge und/oder in ein und demselben Polarisationszustand durchgeführt werden.

**11.** Photometer zur Durchführung des Verfahrens nach einem der Ansprüche 1 bis 10, mit einer breitbandigen Lichtquelle (2), einem Meß- und einem Referenzkanal (3, 4) mit optischen Mitteln (5, 6.1, 6.2, 7) zur Beeinflussung der von der Lichtquelle (2) ausgehenden Strahlung (3.1, 4.1), je einem Fotoempfänger (9, 10) zur Erfassung der Lichtmenge im Meß-und im Referenzkanal mit je einem Ausgang und einer mit den Ausgängen der Fotoempfänger (9, 10) verbundenen Auswertungseinheit (11) zur unter Verwendung eines ersten Korrekturfaktors D erfolgenden Bestimmung der Extinktion einer Probe (Pr) aus den Ausgangssignalen der Fotoempfänger,
**dadurch gekennzeichnet, daß**
die Auswertungseinheit (11) zur Bestimmung der Extinktion der Probe (Pr) unter Verwendung eines zweiten Korrekturfaktors F ausgebildet ist und

- eine Parameter-Eingabeeinheit (13) zur Eingabe von Parametern zur Berechnung des zweiten Korrekturfaktors F und von jeweils bei einer Messung im Meßkanal (3) und im Referenzkanal (4) vorgegebenen Wellenlängen und/oder Polarisationszuständen,

- einen Parameterspeicher (14) für die eingegebenen Parameter, Wellenlängen und/oder Polarisationszustände und

- eine zur Berechnung des zweiten Korrekturfaktors F aus den Parametern, Wellenlängen und/oder Polarisationszuständen ausgebildete Korrekturfaktor-Berechnungseinheit (15) aufweist.

**12.** Photometer nach Anspruch 11, **dadurch gekennzeichnet, daß** die optischen Mittel je ein Farbfilter (6.1, 6.2) im Meßkanal (3) und im Referenzkanal (4) umfassen, wobei das Farbfilter (6.1) im Meßkanal auswechselbar und das Farbfilter (6.2) im Referenzkanal fest eingebaut ist.

**13.** Photometer nach Anspruch 11 oder 12, **dadurch gekennzeichnet, daß** die breitbandige Lichtquelle (2) innerhalb einer vorbestimmbaren Nutzungsdauer ein im wesentlichen konstantes Strahlungsspektrum aufweist.

**14.** Photometer nach einem der Ansprüche 11 bis 13, **dadurch gekennzeichnet, daß** die Berechnungseinheit (15) eine Einrichtung zur analogen Multiplikation aufweist.

**15.** Photometrische Untersuchungsausrüstung mit einem Photometer nach einem der Ansprüche 11 bis 14 und einem Satz von Farbfiltern (6.2) zum wahlweisen Einsetzen nur in den Meßkanal (3) des Fotometers (1) ohne Veränderung der optischen Bedingungen im Referenzkanal (4).

## Claims

**1.** A method for determining the extinction or transmission of at least one sample (Pr), in which
the radiation emitted by a broadband light source (2) [is] divided,
a part of the radiation is conducted to a first photoreceiver (9) via a first light path forming a measurement channel (3) through the sample (Pr) and an exchangeable, first optical filter (6.1) which can filter out a measurement wavelength or a polarisation direction,
another part of the radiation is conducted via a second light path forming a reference channel (4), which comprises optical elements (4a, 4b, 6.2) in particular a second optical filter (6.2), to a second photoreceiver (10),
the respective radiation intensities in the measurement channel and in the reference channel ($M_O$, $M_M$, $R_O$, $R_M$) are determined by means of the photoreceivers (9, 10) and
upon an alteration in the radiation intensity determined in the reference channel when compared with an output value of the intensity value outputted for the measurement channel a corresponding correction is made so that said value substantially corresponds to the intensity which would have been received if the light source had retained its original radiation intensity,
**characterized in that** the radiation intensity value ($R_O$, $R_M$) in the reference channel is determined by means of the optical elements (4a, 4b, 6.2) with an unaltered setting, in particular by means of a fixed filter (6.2), for at least one other wavelength or one other wavelength range or another polarisation state within the radiation spectrum of the broadband light source (2) as the radiation intensity value ($M_O$, $M_M$) determined by means of the exchangeable filter (6.1) in the measurement channel (3) and
for the correction of the intensity value outputted in the measurement channel, the radiation intensity value determined in the reference channel (4) is additionally corrected by a value which for the wavelength or polarisation direction filtered out by the exchangeable filter (6.1) in the measurement channel (3) is predetermined as a function of the light source and the setting of the optical elements (4a, 4b, 6.2) in the reference channel (4), in particular the transmission behaviour of the fixed filter (6.2), in such a manner that it substantially corresponds to the intensity value which would have been determined if in the reference channel (4) a filter would have been used which corresponds in its transmission behaviour to that (6.1) in the measurement channel (3).

2. A method according to Claim 1,
   **characterised in that** the extinction E is determined by using a light intensity value $M_O$ measured during a first measurement in the measurement channel (3), from which as a result of a simultaneous measurement in the reference channel (4) the corrected light intensity value $M_E$ is determined, and by using a light intensity value $M_M$ measured with the sample (Pr) during a second measurement in the measurement channel (3) time-shifted in relation to the first measurement in accordance with

$$E - \log (M_E/M_M) \qquad (1')$$

wherein $M_E$ is produced from the equation

$$M_E = M_O - M_O \cdot D \cdot F = M_O(R_M/R_O) \cdot F \qquad (2),$$

in which D is a first correction factor, which is produced from the light intensity values $R_O$, $R_M$ measured during the first or second measurement in the reference channel according to the equation

$$D = (R_O - R_M)/R_O \qquad (3)$$

and F is a second predetermined correction factor that depends on the wavelength and the polarisation state of the light used during the second measurement in the reference channel.

3. A method according to Claim 1 or 2,
   **characterised in that** measurements are always carried out at the same reference wavelength or in the same reference wavelength range and/or the same reference polarisation state of the light independently of a sample (Pr) to be tested in the measurement channel (3).

4. A method according to Claim 3,
   **characterised in that** in the reference channel (4) measurements are always made with a reference wavelength in the blue range of the spectrum.

5. A method according to Claim 3,
   **characterised in that** in the reference channel measurements are always made in the unfiltered light of the broadband light source (2).

6. A method according to one of the preceding Claims,
   **characterised in that** a second correction value F is determined in accordance with the equation

$$F = a \cdot D^2 + b \cdot D + c \qquad (4)$$

wherein the coefficients a, b and c are dimensionless numerical values, which are calculated according to the spectrum and/or the polarisation state of the original light of the light source (2) and of the wavelengths or wavelength ranges and/or polarisation states of the light, in which measurements are made in the measurement or reference channel (3, 4).

7. A method according to one of Claims 1 to 5,
   **characterised in that** a second correction value F is determined by means of an approximation equation, in which dimensionless numerical values occur as coefficients, which are calculated corresponding to the spectrum and/or the polarisation state of the original light of the light source (2) and of the wavelengths or wavelength ranges and/or polarisation states of the light in which measurements are taken in the measurement and reference channel (3, 4).

**8.** A method according to one of the preceding Claims,
**characterised in that** a first measurement is performed in the measurement channel (3) without a sample (Pr).

**9.** A method according to one of the preceding Claims,
**characterised in that** a first measurement is performed in the measurement channel (3) with a sample (4) before and a second measurement is performed with the same sample (Pr) after an actual or expected physical or chemical change to said sample.

**10.** A method according to one of the preceding Claims,
**characterised in that** a sequence of second measurements is performed with one and the same sample (Pr) with different wavelengths or in various wavelength ranges and/or polarisation states of the light in the measurement channel (3), with all measurements in the reference channel (4) being performed at one and the same wavelength and/or one and the same polarisation state.

**11.** A photometer for performing the method according to one of Claims 1 to 10, having a broadband light source (2), a measurement and a reference channel (3, 4) with optical means (5, 6.1, 6.2, 7) for influencing the radiation (3.1, 4.1) coming from the light source (2), a photoreceiver (9, 10) for recording the amount of light in the measurement and reference channel each having one output and an evaluation unit (11) connected to the outputs of the photoreceivers (9, 10) for determining the extinction of a sample (Pr), which is performed using a first correction factor D, from the output signals of the photoreceivers,
**characterised in that** the evaluation unit (11) is designed to determine the extinction of the sample (Pr) using a second correction factor F and comprises

- a parameter input unit (13) for entering parameters for the calculation of the second correction factor F and wavelengths and/or polarisation states preset in each case during a measurement in the measurement channel (3) and in the reference channel (4),

- a parameter memory (14) for the inputted parameters, wavelengths and/or polarisation states and

- a correction factor computation unit (15) constructed to calculate the second correction value F from the parameters, wavelengths and/or polarisation states.

**12.** A photometer according to Claim 11,
**characterised in that** the optical means each comprise a colour filter (6.1, 6.2) in the measurement channel (3) and in the reference channel (4), with it being possible to exchange the colour filter (6.1) in the measurement channel and the colour filter (6.2) in the reference channel being permanently fitted.

**13.** A photometer according to Claim 11 or 12,
**characterised in that** the broadband light source (2) comprises a substantially constant radiation spectrum within a predeterminable service life.

**14.** A photometer according to one of Claims 11 to 13,
**characterised in that** the computation unit (15) comprises a device for analogue multiplication.

**15.** Photometric testing equipment having a photometer according to one of Claims 11 to 14 and a set of colour filters (6.2) for optional use only in the measurement channel (3) of the photometer (1) without altering the optical conditions in the reference channel (4).

**Revendications**

**1.** Procédé pour déterminer l'extinction ou la transmission d'au moins un échantillon (Pr), selon lequel
on divise le rayonnement émis par une source lumineuse (2) à bande large,
on envoie une partie du rayonnement à un premier photodétecteur (9) par l'intermédiaire d'un premier trajet lumineux formant un canal de mesure (3) à travers l'échantillon (Pr) et un premier filtre optique (6.1) démontable filtrant une longueur d'onde mesurée ou une direction de polarisation,
on envoie une autre partie du rayonnement à un deuxième photodétecteur (10) par l'intermédiaire d'un deuxième trajet lumineux formant un canal de référence (4) qui présente des éléments optiques (4a, 4b, 6), en particulier un deuxième filtre optique (6.2),

on détermine au moyen des photodétecteurs (9, 10) chacune des intensités de rayonnement dans le canal de mesure et dans le canal de référence ($M_0$, $M_M$, $R_0$, $R_M$) et

pour une modification de l'intensité de rayonnement déterminée dans le canal de référence par rapport à une valeur de départ, on corrige de manière correspondante la valeur d'intensité donnée pour le canal de mesure pour qu'elle corresponde sensiblement à celle de l'intensité qui serait réceptionnée si la source lumineuse avait conservé son intensité de rayonnement d'origine,

**caractérisé en ce que** la valeur d'intensité de rayonnement ($R_0$, $R_M$) dans le canal de référence (4) est déterminée au moyen des éléments optiques (4a, 4b) réglés de manière non modifiée, en particulier au moyen d'un filtre fixe (6.2) pour au moins une autre longueur d'onde ou un autre domaine de longueur d'onde ou un autre état de polarisation à l'intérieur d'un spectre de rayonnement de la source lumineuse à large bande (2) comme la valeur d'intensité de rayonnement ($M_0$, $M_M$) déterminée au moyen du filtre démontable (6.1) dans le canal de mesure (3) et,

pour la correction de la valeur d'intensité de rayonnement donnée dans le canal de mesure,

la valeur d'intensité de rayonnement définie dans le canal de référence (4), est corrigée en outre à une valeur qui, pour la longueur d'onde ou la direction de polarisation filtrée par le filtre démontable (6.1) dans le canal de mesure (3), est prédéterminée en fonction de la source lumineuse et du réglage des éléments optiques (4a, 4b, 62) dans le canal de référence (4), en particulier le comportement de transmission du filtre fixe (6.2), de manière qu'elle corresponde sensiblement à celle de la valeur d'intensité qui serait déterminée si dans le canal de référence (4) un filtre était utilisé, qui corresponde dans son comportement de transmission à celui (6.1) dans le canal de mesure.

2. Procédé selon la revendication 1, **caractérisé en ce que** l'extinction E est déterminée en utilisant une valeur d'intensité de lumière $M_0$ mesurée par une première mesure dans le canal de mesure (3), à partir de laquelle en conséquence d'une mesure simultanée dans le canal de référence (4) de la valeur d'intensité de lumière corrigée $M_E$, et est déterminée en utilisant une valeur d'intensité de lumière $M_M$ mesurée par une deuxième mesure avec l'échantillon (Pr) déplacée dans le temps par rapport à la première mesure dans le canal de mesure (3) selon

$$E = \log (M_E/M_M) \tag{1'}$$

$M_E$ étant donné par la relation

$$M_E = M_0 - M_0.D.F = M_0 \, (R_M/R_0) \cdot F \tag{2}$$

dans laquelle D est un premier facteur de correction qui est donné par les valeurs d'intensité de lumière $R_0$, $R_M$ mesurées pendant la première ou la deuxième mesure dans le canal de référence selon la relation

$$D = (R_0 - R_M)/R_0 \tag{3}$$

et F est un deuxième facteur de correction prédéterminé en fonction de la longueur d'onde et de l'état de polarisation de la lumière utilisée pour la deuxième mesure dans le canal de référence.

3. Procédé selon la revendication 1 ou 2, **caractérisé en ce qu'**on effectue la mesure indépendamment d'un échantillon (Pr) à étudier dans le canal de mesure (3) on mesure toujours dans le canal de référence (4) à une même longueur d'onde de référence ou dans le même domaine de longueurs d'onde de référence et/ou dans le même état de polarisation de référence.

4. Procédé selon la revendication 3, **caractérisé en ce qu'**on effectue la mesure dans le canal de référence (4) toujours à une longueur d'onde de référence dans le domaine bleu du spectre.

5. Procédé selon la revendication 3, **caractérisé en ce qu'**on effectue la mesure dans le canal de référence toujours dans de la lumière non filtrée de la source lumineuse à bande large (2).

6. Procédé selon l'une des revendications précédentes, **caractérisé en ce qu'**on détermine un deuxième facteur de correction F selon la relation

$$F = a.D^2 + b.D + c \hspace{5cm} (4)$$

dans laquelle les coefficients a, b et c sont des valeurs sans dimension, qui se calculent en fonction du spectre et/ou de l'état de polarisation de la lumière d'origine de la source lumineuse (2) et de la longueur d'onde ou des domaines de longueurs d'onde et/ou des états de polarisation de la lumière, dans lesquels on mesure dans le canal de mesure ou le canal de référence (3,4).

7. Procédé selon l'une des revendications 1 à 5, **caractérisé en ce qu'**on calcule un deuxième facteur F au moyen d'une relation d'approximation, dans laquelle des valeurs sans dimension représentent des coefficients qui se calculent en fonction du spectre et/ou à l'état de polarisation de la lumière d'origine de la source lumineuse (2) et de la longueur d'onde ou des domaines de longueurs d'onde et/ou des états de polarisation de la lumière dans lesquels on mesure dans le canal de mesure ou le canal de référence (3,4).

8. Procédé selon l'une des revendications précédents, **caractérisé en ce qu'**on effectue une première mesure dans le canal de mesure (3) sans échantillon (Pr).

9. Procédé selon l'une des revendications précédentes, **caractérisé en ce qu'**on prévoit une première mesure dans le canal de mesure (3) avec un échantillon (4) et une deuxième mesure avec le même échantillon (Pr) après une modification physique ou chimique effective ou attendue du même échantillon.

10. Procédé selon l'une des revendications précédentes, **caractérisé en ce qu'**on effectue avec un et le même échantillon (PR) une suite de deux mesures à des longueurs d'onde différentes ou dans des domaines de longueurs d'onde différents et/ou des états de polarisation de la lumière différents dans le canal de mesure (3), toutes les mesures étant effectuées dans le canal de référence (4) pour une et la même longueur d'onde et/ou un et le même état de polarisation.

11. Photomètre pour effectuer le procédé selon l'une des revendications 1 à 10, avec une source lumineuse à large bande (2), un canal de mesure et un canal de référence (3,4) avec des moyens optiques (5, 6.1, 6.2, 7) pour influencer le rayonnement (3.1, 4.1) provenant de la source lumineuse (2), chaque fois un photodétecteur (9, 10) pour saisir la quantité de lumière dans le canal de référence et dans le canal de mesure avec chaque fois une sortie et une unité d'évaluation (11) liée avec les sorties des photodétecteurs (9, 10) pour la définition, ayant lieu par application d'un premier facteur de correction D, de l'extinction d'un échantillon (Pr) provenant des signaux de sortie des photodétecteurs,
**caractérisé en ce que** l'unité d'évaluation (11) est prévue pour la définition de l'extinction de l'échantillon (Pr) en utilisant un deuxième facteur de correction F et présente

- une unité d'entrée de paramètres (13) pour entrer des paramètres pour calculer le deuxième facteur de correction F et chaque fois pour une mesure dans le canal de mesure (3) et dans le canal de référence (4) de la longueur d'onde et/ou des états de polarisation donnés,
- un enregistreur de paramètres (14) pour les paramètres, les longueurs d'onde et/ou les états de polarisation donnés et
- une unité de calcul des facteurs de correction (15) formée pour calculer le deuxième facteur de conection F à partir des paramètres, des longueurs d'onde et/ou des états de polarisation.

12. Photomètre selon la revendication 11, caractérisè en ce que le moyen optique comprend chaque fois un filtre de couleur (6.1, 6.2) dans le canal de mesure (3) et dans le canal de référence (4), le filtre de couleur (6.1) dans le canal de mesure étant démontable et le filtre de couleur (6.2) dans le canal de référence étant fixe.

13. Photomètre selon la revendication 11 ou 12, **caractérisé en ce que** la source lumineuse à large bande (2) présente à l'intérieur d'une durée d'utilisation prédéterminée un spectre de rayonnement sensiblement constant.

14. Photomètre selon l'une des revendications 11 à 13, **caractérisé en ce que** l'unité de calcul (15) présente un dispositif pour la multiplication analogique.

15. Installation de recherche photométrique avec un photomètre selon l'une des revendications 11 à 14 et un groupe de filtre de couleur (6.2) pour l'insertion au choix seulement dans le canal de mesure (3) du photomètre (1) sans modification des conditions optiques dans le canal de référence (4).

Fig. 1

Fig. 2